# EUROPEAN PATENT SPECIFICATION

(11) **EP 0 717 266 B1**
(45) Date of publication and mention of the grant of the patent: **09.06.1999**
(21) Application number: 95309035.4
(22) Date of filing: 12.12.1995
(51) Int. Cl.: G01D 5/165

(54) **Variable resistance sensor**
Resistiver Sensor
Capteur résistif variable

(30) Priority: 14.12.1994 GB 9425257
(43) Date of publication of application: 19.06.1996
(73) Proprietor: LUCAS INDUSTRIES public limited company, London W1Y 4DJ (GB)
(72) Inventor: Smith, Kenneth Leonard, Rainham, Kent, ME8 2NQ (GB)
(74) Representative: Bibby, William Mark

(56) References cited:
- DE-A- 1 947 739
- ELEKTRONIK, vol. 38, no. 5, 3 March 1989 MÜNCHEN,DE, pages 91-96, XP 000105958 GASS 'Gütemerkmale von Leitplastik-Potentiometern'

## Description

This invention relates to variable resistance sensors, particularly, though not exclusively, variable resistance sensors used to sense the linear or angular position of a vehicle pedal, such as a vehicle throttle pedal.

A known variable resistance sensor comprises an electrically conductive track and a wiper which is mechanically coupled to the pedal and moves along the track, in electrical contact therewith, as the position of the pedal changes. The wiper acts as a potential divider such that a voltage measured between the wiper and one end of the track represents the position of the wiper along the track, which, in turn, corresponds to the position of the pedal.

GB 2243689 discloses a dual-track variable resistance sensor. This has the advantage that if a fault develops in one of the tracks, the other track can still be used allowing the pedal to continue operating.

Variable resistance sensors of this kind suffer from the drawback that the tracks are susceptible to wear, and this may give rise to a false indication of pedal position.

The tracks tend to suffer the most wear in the end regions corresponding to the most frequently adopted pedal positions, that is, the position adopted by the pedal during idling and when the throttle is fully open. With a view to alleviating this problem, it has been customary to use microswitches which are activated when the pedal reaches the idling position and the fully-open position, and thereby provide independent verification of the output from the variable resistance sensor. However, microswitches are relatively expensive components and add to the complexity of the sensor.

According to a first aspect of the invention there is provided a variable resistance sensor comprising a track and a wiper which can move along the track, in contact therewith, wherein the track comprises an electrically-conductive section and a non-electrically-conductive section, the electrically-conductive section of track being supplied with a first reference voltage and being connected to a reference terminal via an electrically resistive path having a fixed resistance value, and the reference terminal being maintained at a further reference voltage, whereby a voltage difference measured between the wiper and the reference terminal provides an indication of the respective section of track being contacted by the wiper.

Preferably, the track comprises more than one said electrically-conductive section, each said section being supplied with a reference voltage and being connected to said reference terminal via a different electrically resistive path having a respective fixed resistance value. The electrically resistive paths may all have different resistance values.

The said reference voltages and resistance values may be chosen so that a voltage difference measured between the wiper and the reference terminal lies in a respective one of different non-overlapping voltage ranges according to the respective section of track which the wiper is contacting. Accordingly, the measured output voltage provides an unambiguous indication of the section of track being contacted by the wiper.

In a preferred embodiment of the invention, the track comprises two said electrically-conductive sections.

In this case, the variable resistive sensor may comprise a track and a wiper which can move along the track in contact therewith, wherein the track comprises a first electrically-conductive section supplied with a first reference voltage, a second electrically-conductive section supplied with a second reference voltage different from the first reference voltage and a non-electrically-conductive section interconnecting said first and second electrically-conductive sections of the track, and wherein the first and second electrically-conductive sections of track are connected to a reference terminal via respective electrically resistive paths having different resistance values, the reference terminal being maintained at a further reference voltage, whereby a voltage difference measured between the wiper and the reference terminal provides an indication of the respective section of track being contacted by the wiper.

Preferably, the first and second reference voltages and said different resistance values are chosen so that the measured voltage difference lies in a respective one of different non-overlapping voltage ranges according to the particular section of track which the wiper is contacting.

In a preferred embodiment, said first electrically-conductive section of track is connected to a source of said first reference voltage and said second electrically-conductive section of track is connected to said source via an electrically resistive path having a fixed electrical resistance.

The reference terminal may be maintained at ground potential.

A variable resistance sensor according to the first aspect of the invention can be used to validate the output of a conventional sensor, of the kind described hereinbefore, used to sense the linear or angular position of a vehicle pedal.

According to a yet further aspect of the invention there is provided a variable resistance sensor for sensing the position of a moveable component, such as a vehicle pedal, comprising a first variable resistance sensor having an electrically resistive track and a wiper which can move along the track in electrical contact therewith as the position of the moveable component changes, and a second variable resistance sensor according to said first aspect of the invention, wherein the respective tracks of said first and second variable resistance sensors are arranged in parallel and the wiper of the first variable resistance sensor is mechanically coupled to the wiper of the second variable resistance sensor so that both wipers can move along their respective tracks together as the position of the moveable component changes.

An output from the second variable resistance sensor is produced independently of the first variable resistance sensor, and can be used to validate an output from the first variable resistance sensor.

As in the case of said first aspect of the invention, the track of the second electrical resistance sensor may comprise more than one said electrically-conductive section, each such section being supplied with a different reference voltage and being connected to said reference terminal via a different electrically resistive path having a respective resistance value. The electrically resistive paths may all have different resistance values. The reference voltage and resistance values are preferably chosen so that a voltage difference measured between the wiper and the reference terminal lies in a respective one of different non-overlapping voltage ranges according to the respective sections of track which the wiper is contacting. By this means, the second variable resistance sensor provides an unambiguous indication of the section of track being contacted, thereby improving the reliability with which the output of the first variable resistance sensor may be validated.

A variable resistance sensor according to the invention is now described, by way of example only, with reference to the accompanying drawings, in which:
Figure 1 is a diagrammatic illustration of the variable resistance sensor, and
Figure 2 illustrates how an output voltage from the sensor varies as a function of wiper position along the sensor track.

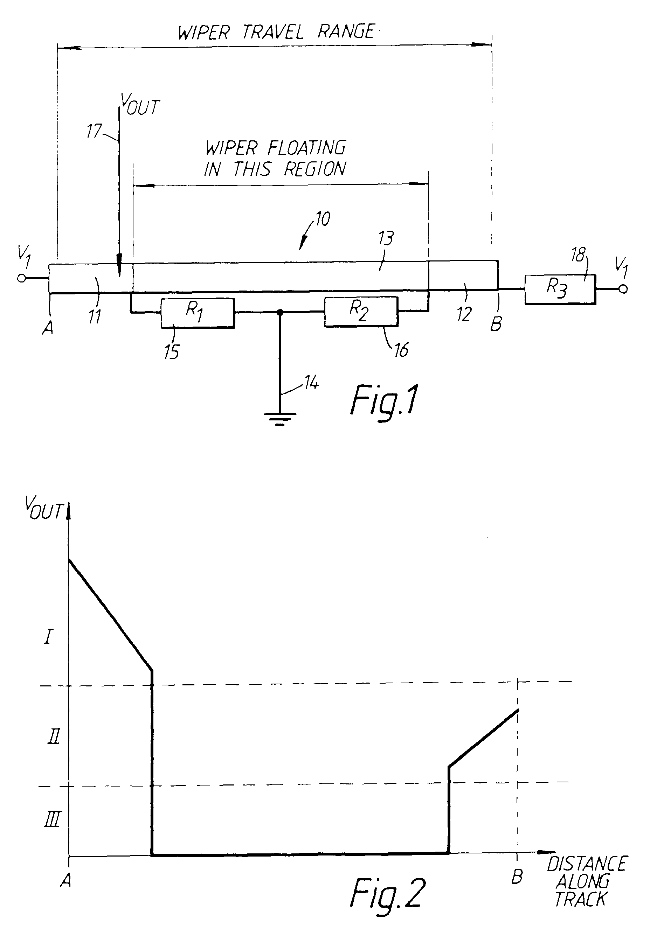

Referring to Figure 1, the variable resistance sensor comprises a track 10 having three distinct sections; namely a first electrically-conductive section 11 at one end of the track, a second electrically-conductive section 12 at the opposite end of the track and a non-electrically-conductive section 13 interconnecting sections 11 and 12.

The first electrically-conductive section 11 is connected directly to a source of a first reference voltage V₁, and the second electrically-conductive section 12 is also connected to the source via an electrical resistor 18 having a fixed resistance R₃. The first and second electrically-conductive sections 11,12 are also connected to a common reference terminal 14 via respective resistors 15,16 having different fixed resistances R₁ and R₂, and the reference terminal 14 is maintained at a further reference voltage which, in this embodiment is ground potential.

The sensor has a wiper 17 which can move along track 10 in contact therewith.

The resistances R₁, R₂ and R₃ are so chosen that an output voltage Vₒᵤₜ measured between the wiper 17 and the grounded reference terminal 14 will be within a respective one of different non-overlapping voltage ranges according to the respective section of track being contacted by the wiper.

Figure 2 shows how the output voltage Vₒᵤₜ changes as the wiper moves from one end A of the track to the opposite end B.

As can be seen from Figure 2, if the wiper is in contact with the first section of track 11 the output voltage Vₒᵤₜ is within a first range (I) of relatively high voltage values, if the wiper is in contact with the second section of track 12 the output voltage Vₒᵤₜ is within a second range (II) of intermediate voltage values, whereas if the wiper is in contact with the non-conductive section of track 13 the output voltage Vₒᵤₜ will be brought to ground potential, defining the lower bound of a third range III of relatively low resistance values.

It will be noted from Figure 2 that the above resistance ranges I, II and III are non-overlapping. Accordingly, the variable resistance sensor provides an unambiguous indication of the respective section of track being contacted by the wiper, and may be used to provide reliable validation of the output from a conventional variable resistance sensor, of the kind described hereinbefore, obviating the need for more complex circuitry, such as microswitches. To this end, the track of a variable resistance sensor whose output requires to be validated (the measurement sensor) is arranged in parallel with the track of a sensor according to the invention (the validating sensor), and the respective wipers of the sensors are coupled together mechanically so that they move along their respective tracks in unison.

In the case of a measurement sensor which is being used to sense the position of a vehicle pedal, such as a vehicle throttle pedal, the first and the second sections of track 11,12 in the validating sensor will typically be aligned with respective end sections of the track in the measurement sensor. As already explained, the end sections of the track are particularly susceptible to wear in that they correspond to frequently-used pedal positions; that is, positions at opposite ends of the pedal's travel respectively adopted during idling and when the throttle is fully open.

In some applications, it may be desired to validate the output voltage derived from one end only of the sensor track - in this case, the track in the validating sensor may only have a single electrically conductive section. Alternatively, it may be desired to validate the outputs derived from a multiplicity of different regions along the track, and in this case the track of the validating sensor may have three or more electrically-conductive sections, each of which is supplied with a respective reference voltage and is connected to terminal 14 via a respective resistor.

The or each electrically-conductive section of track may be formed by depositing respective layers of electrically-conductive material (such as a metallic ink) on a surface of an electrically-insulating substrate, using a screen technique, for example. A variable resistance sensor according to the present invention may therefore be manufactured and assembled at relatively low cost. Moreover, the sensor eliminates the need for tolerance setting, required when microswitches are used, and provides for enhanced protection of interconnection failures and connector electrolytic contamination.

## Claims

1. A variable resistance sensor comprising a track (10) and a wiper (17) which can move along the track (10), in contact with the track, wherein the track (10) comprises an electrically-conductive section (11), the electrically-conductive section (11) of the track being supplied with a first reference voltage (V₁) characterized in that the track further comprises a non-electrically conductive section (13) and the electrically-conductive section (11) is connected to a reference terminal (14) via an electrically resistive path (15) having a fixed resistance value, and the reference terminal (14) being maintained at a further reference voltage, whereby a voltage difference measured between the wiper (17) and the reference terminal (14) provides an indication of the respective section of track (10) being contacted by the wiper (17).

2. A sensor as claimed in claim 1 wherein the track (10) comprises more than one said electrically-conductive section (11,12), each said section (11,12) being supplied with a reference voltage and being connected to said reference terminal (14) via a different electrically resistive path (15,16) having a respective fixed resistance.

3. A sensor as claimed in claim 2 wherein the electrically resistive paths (15,16) all have different resistance values.

4. A sensor as claimed in claim 2 or claim 3 wherein said reference voltages and resistance values are chosen so that a voltage difference measured between the wiper (17) and the reference terminal (14) lies in a respective one of different non-overlapping voltage ranges according to the respective section of track (11,12,13) which the wiper (17) is contacting.

5. A sensor as claimed in claim 1 wherein the track (10) comprises two said electrically-conductive sections (11,12).

6. A sensor as claimed in claim 5 wherein the track (10) comprises a first electrically-conductive section (11) supplied with a first reference voltage, a second electrically-conductive section (12) supplied with a second reference voltage different from the first reference voltage and a non-electrically-conductive section (13)interconnecting said first and second electrically-conductive sections of track (11,12), wherein the first and second electrically-conductive sections of track (11,12) are connected to a reference terminal (14) via respective electrically resistive paths (15,16) having different resistance values, the reference terminal (14) being maintained at a further reference voltage, whereby a voltage difference measured between the wiper (17) and the reference terminal (14) provides an indication of the respective section of track (10) being contacted by the wiper (17).

7. A sensor as claimed in claim 6 wherein the first and second reference voltages and said different resistance values are chosen so that the measured voltage difference lies in a respective one of different non-overlapping voltage ranges according to the particular section of track (10) which the wiper (17) is contacting.

8. A sensor as claimed in claim 7 wherein said first electrically-conductive section of track (11) is connected to a source of said first reference voltage and said second electrically-conductive section of track (12) is connected to said source via an electrically resistive path (18) having a fixed resistance.

9. A sensor as claimed in claim 8 wherein said reference terminal (14) is maintained at ground potential.

10. A variable resistance sensor for sensing the position of a moveable component, such as a vehicle pedal, comprising a first variable resistance sensor having an electrically resistive track and a wiper which can move along the track in electrical contact therewith as the position of the moveable component changes, and a second variable resistance sensor according to any one of claims 1 to 9, wherein the respective tracks of said first and second variable resistance sensors are arranged in parallel and the wiper of the first variable resistance sensor is mechanically coupled to the wiper of the second variable resistance sensor so that both wipers can move along their respective tracks together as the position of the moveable component changes.

## Patentansprüche

1. Ein veränderlicher Widerstandssensor, der eine Bahn (10) und einen Schleifkontakt (17) umfaßt, der sich entlang der Bahn (10) in Kontakt mit der Bahn bewegen kann, wobei die Bahn (10) einen elektrischleitenden Abschnitt (11) umfaßt und dem elektrischleitenden Abschnitt (11) der Bahn eine erste Bezugsspannung (V₁) zugeführt wird, **dadurch gekennzeichnet,** daß die Bahn des weiteren einen elektrisch nichtleitenden Abschnitt (13) umfaßt und der elektrischleitende Abschnitt (11) mit einer Bezugsklemme (14) über einen elektrischen Widerstandspfad (15) verbunden ist, der einen festgelegten Widerstandswert aufweist, und die Bezugsklemme (14) auf einer weiteren Bezugsspannung gehalten wird, wodurch eine zwischen dem Schleifkontakt (17) und der Bezugsklemme (14) gemessene Spannungsdifferenz einer Angabe über den entsprechenden Abschnitt der Bahn (10) liefert, der von dem Schleifkontakt (17) berührt wird.

2. Ein Sensor, wie in Anspruch 1 beansprucht, wobei die Bahn (10) mehr als den einen genannten elektrischleitenden Abschnitt (11, 12) umfaßt, jedem genannten Abschnitt (11, 12) eine Bezugsspannung zugeführt wird und jeder mit der genannten Bezugsklemme (14) über einen unterschiedlichen elektrischen Widerstandspfad (15, 16) verbunden ist, der einen entsprechenden festen Widerstandswert aufweist.

3. Ein Sensor, wie in Anspruch 2 beansprucht, wobei die elektrischen Widerstandspfade (15, 16) alle unterschiedliche Widerstandswerte aufweisen.

4. Ein Sensor, wie in Anspruch 2 oder Anspruch 3 beansprucht, wobei die genannten Bezugsspannungen und Widerstandswerte derart gewählt werden, daß eine zwischen dem Gleitkontakt (17) und der Bezugsklemme (14) gemessene Spannungsdifferenz in einem entsprechenden der verschiedenen, sich nichtüberlappenden Spannungsbereiche gemäß dem entsprechenden Bahnabschnitt (11, 12, 13) liegt, den der Gleitkontakt (17) berührt.

5. Ein Sensor, wie in Anspruch 1 beansprucht, wobei die Bahn (10) zwei genannte elektrischleitende Abschnitte (11, 12) umfaßt.

6. Ein Sensor, wie in Anspruch 5 beansprucht, wobei die Bahn (10) umfaßt einen ersten, elektrischleitenden Abschnitt (11), dem eine erste Bezugsspannung zugeführt wird, einen zweiten, elektrischleitenden Abschnitt (12), dem eine zweite von der ersten Bezugsspannung verschiedene Bezugsspannung zugeführt wird, und einen elektrisch nichtleitenden Abschnitt (13), der den genannten ersten und zweiten, elektrischleitenden Bahnabschnitt (11, 12) verbindet, wobei der erste und der zweite elektrischleitende Bahnabschnitt (11, 12) mit einer Bezugsklemme (14) über entsprechende elektrische Widerstandspfade (15, 16) verbunden sind, die unterschiedliche Widerstandswerte aufweisen, die Bezugsklemme (14) auf einer weiteren Bezugsspannung gehalten wird, wodurch eine zwischen dem Gleitkontakt (17) und der Bezugsklemme (14) gemessene Spannungsdifferenz eine Angabe des entsprechenden Abschnitts der Bahn (10) liefert, der von dem Gleitkontakt (17) berührt wird.

7. Ein Sensor, wie in Anspruch 6 beansprucht, wobei die erste und zweite Bezugsspannung und die genannten unterschiedlichen Widerstandswerte so gewählt werden, daß die gemessene Spannungsdifferenz in einem entsprechenden der verschiedenen, sich nichtüberlappenden Spannungsbereiche gemäß dem bestimmten Abschnitt der Bahn (10) liegt, den der Gleitkontakt (17) berührt.

8. Ein Sensor, wie in Anspruch 7 beansprucht, wobei der genannte erste, elektrischleitende Abschnitt (11) der Bahn mit einer Quelle der genannten ersten Bezugsspannung verbunden ist und der genannte zweite, elektrischleitende Abschnitt (12) der Bahn mit der genannten Quelle über einen elektrischen Widerstandspfad (18) verbunden ist, der einen festen Widerstandswert aufweist.

9. Ein Sensor, wie in Anspruch 8 beansprucht, wobei die genannte Bezugsklemme (14) auf Massepotential gehalten ist.

10. Ein veränderlicher Widerstandssensor zum Erfassen der Position eines bewegbaren Teils, wie eines Fahrzeugpedals, der einen ersten veränderlichen Widerstandssensor mit einer elektrischen Widerstandsbahn und einem Schleifkontakt, der sich entlang der Bahn in elektrischem Kontakt mit ihr bewegen kann, wenn sich die Position des bewegbaren Teils ändert, und einen zweiten, veränderlichen Widerstandssensor gemäß einem der Ansprüche 1 bis 9 umfaßt, wobei die entsprechenden Bahnen des genannten ersten und zweiten, veränderlichen Widerstandssensors parallel angeordnet sind und der Schleifkontakt des ersten, veränderlichen Widerstandssensors mechanisch mit dem Schleifkontakt des zweiten, veränderlichen Widerstandssensors gekoppelt ist, so daß sich beide Schleifkontakte entlang ihrer entsprechenden Bahnen zusammen bewegen können, wenn sich die Position des bewegbaren Teils ändert.

## Revendications

1. Capteur à résistance variable comprenant un rail (10) et un curseur (17) qui peut se déplacer le long du rail (10), en contact avec le rail, où le rail (10) comprend une partie électriquement conductrice (11), la partie électriquement conductrice (11) du rail recevant une première tension de référence (V₁), caractérisé en ce que le rail comprend en outre une partie électriquement non conductrice (13) et en ce que la partie électriquement conductrice (11) est connectée à une borne de référence (14) via un trajet électriquement conducteur (15) qui présente une valeur de résistance fixe, la borne de référence (14) étant maintenue à une autre tension de référence, de sorte que la différence de tension mesurée entre le curseur (17) et la borne de référence (14) fournit une indication de la partie respective du rail (10) qui est en contact avec le curseur (17).

2. Capteur selon la revendication 1, où le rail (10) comprend plus d'une dite partie électriquement conductrice (11, 12), chaque dite partie (11, 12) recevant une tension de référence et étant connectée à ladite borne de référence (14) par l'intermédiaire d'un trajet électriquement conducteur différent (15, 16) qui présente une résistance fixe respective.

3. Capteur selon la revendication 2, où les trajets électriquement conducteurs (15, 16) ont chacun une valeur de résistance différente.

4. Capteur selon la revendication 2 ou 3, où lesdites tensions de référence et lesdites valeurs de résistance sont choisies de façon que la différence de tension mesurée entre le curseur (17) et la borne de référence (14) se trouve dans un intervalle respectif, parmi des intervalles de tension différents ne se chevauchant pas, en fonction de la partie respective du rail (11, 12, 13) avec laquelle le curseur (17) est en contact.

5. Capteur selon la revendication 1, où le rail (10) comprend deux dites parties électriquement conductrices (11, 12).

6. Capteur selon la revendication 5, où le rail (10) comprend une première partie électriquement conductrice (11) recevant une première tension de référence, une deuxième partie électriquement conductrice (12) recevant une deuxième tension de référence différente de la première tension de référence, et une partie électriquement non conductrice (13) reliant entre elles lesdites première et deuxième parties électriquement conductrices (11, 12) du rail, où les première et deuxième parties électriquement conductrices (11, 12) du rail sont connectées à une borne de référence (14) par l'intermédiaire de trajets électriquement conducteurs respectifs (15, 16) ayant des valeurs de résistance différentes, la borne de référence (14) étant maintenue à une autre tension de référence, de sorte que la différence de tension mesurée entre le curseur (17) et la borne de référence (14) fournit une indication de la partie respective du rail (10) qui est en contact avec le curseur (17).

7. Capteur selon la revendication 6, où les première et deuxième tensions de référence et lesdites valeurs de résistance différentes sont choisies de façon que la différence de tension mesurée se trouve dans un intervalle respectif, parmi des intervalles de tension différents ne se chevauchant pas, en fonction de la partie particulière du rail (10) avec laquelle le curseur (17) est en contact.

8. Capteur selon la revendication 7, où la première partie électriquement conductrice (11) du rail est connectée à une source de ladite première tension de référence, et la deuxième partie électriquement conductrice (12) du rail est connectée à ladite source par l'intermédiaire d'un trajet électriquement conducteur (18) qui possède une résistance fixe.

9. Capteur selon la revendication 8, où ladite borne de référence (14) est maintenue au potentiel de la masse électrique.

10. Capteur à résistance variable servant à mesurer la position d'un composant mobile, par exemple une pédale de véhicule, comprenant un premier capteur à résistance variable possédant un rail électriquement conducteur et un curseur qui peut se déplacer le long du rail en contact électrique avec celui-ci lorsque la position du composant mobile varie, et un deuxième capteur à résistance variable selon l'une quelconque des revendications 1 à 9, où les rails respectifs desdits premier et deuxième capteurs à résistance variable sont disposés en parallèle et le curseur du premier capteur à résistance variable est mécaniquement couplé au curseur du deuxième capteur à résistance variable de façon que les deux curseurs puissent se déplacer ensemble le long de leurs rails respectifs lorsque la positon du composant mobile varie.
